# EUROPEAN PATENT SPECIFICATION

(11) **EP 0 279 297 B1**
(45) Date of publication and mention of the grant of the patent: **29.12.1993**
(21) Application number: 88101696.8
(22) Date of filing: 05.02.1988
(51) Int. Cl.: G06F 15/68, G06F 15/70

(54) **Pattern contours in image processing**
Musterkonturen in Bildverarbeitung
Contours de modèle en traitement d'image

(30) Priority: 06.02.1987 JP 25711/87; 18.06.1987 JP 152001/87
(43) Date of publication of application: 24.08.1988
(73) Proprietor: FUJITSU LIMITED, Kawasaki-shi, Kanagawa 211 (JP)
(72) Inventor: Toriu, Takashi FUJITSU LTD. Patent Dept., Kawasaki-shi Kanagawa 211 (US); Iwase, Hiromichi FUJITSU LTD. Patent Dept., Kawasaki-shi Kanagawa 211 (US)
(74) Representative: Sunderland, James Harry

(56) References cited:
- GB-A- 2 171 272
- COMPUTER GRAPHICS AND IMAGE PROCESSING, vol. 6, no. 5, October 1977, pages 492-501, Academic Press, Inc., New York, US; G.S. ROBINSON: "Edge detection by compass gradient masks"
- PATTERN RECOGNITION, vol. 10, no. 4, 1978, pages 261-264, Pergamon Press Ltd, Elmsford, US; C.H. CHEN: "Note on a modified gradient method for image analysis"

## Description

This invention relates to the extraction of pattern contours in image processing and concerns method and apparatus for extracting contour lines from a pattern obtained in image processing technology.

As image processing technology progresses, its fields of application are expanding into the fields of handling or inspecting images of objects, or recognizing characters, in which contour lines of an object image are extracted and distinguished from the pattern formed by an input signal obtained from a TV camera or like source.

In image processing, a picture image is decomposed into small picture elements (picture element is usually abbreviated to "pixel") forming a matrix. Information concerning each pixel is stored in a memory unit in the form of a "word", which has a specified word length including address information in a rectangular-coordinate system, multi gray level information (brightness or density level of each pixel having a multi-level magnitude) of 3 to 8 bits, and primary colour information of red, green and blue.

In relation to processing techniques for extracting contours of an image, colour information may be of little interest.

Several methods for extracting pattern contours have been proposed previously.
(1) A pattern is first processed into a binary coded pattern, and then an edge boundary thereof is extracted. This method has the merit of high speed, but it is difficult to select the appropriate threshold value for binary coding of the pattern.
(2) A pattern is checked to determine whether or not a pixel has a large change in density or gray level among neighbouring pixels, and when the pixel is found to have a large change, the pixel is discriminated to be on a contour line. This method has a demerit of forming many broken off contours.
(3) A pattern is subjected to Gauss Laplacian processing (a kind of determination of a second derivative of gray level of each pixel), and when the pixel is found to have a sign change with regard to neighbouring pixels, the pixel is regarded as being on a contour line. Accuracy is very good, but this method requires a large-scale computer system.
(4) A pattern is checked to determine whether a pixel has the maximum gray level gradient in the direction of its gray level gradient. Accuracy is very good, but considerable time is required in processing.

Among the above-mentioned methods, method (4) would be very advantageous in terms of accuracy and hardware-scale if processing speed could be improved. The reason why this method requires a great deal of time is that it mainly depends on software technology because of the complexities of its algorithm. Details of the algorithm of this method will be explained further.

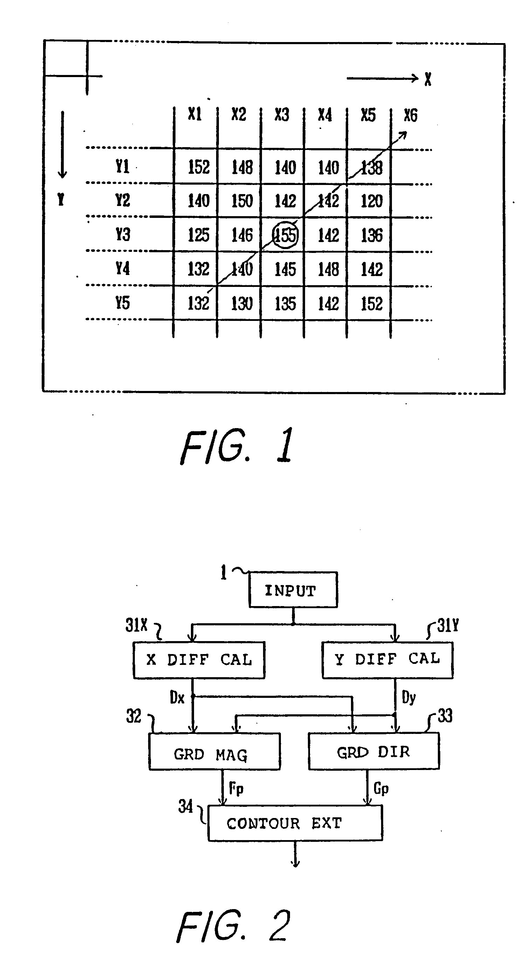

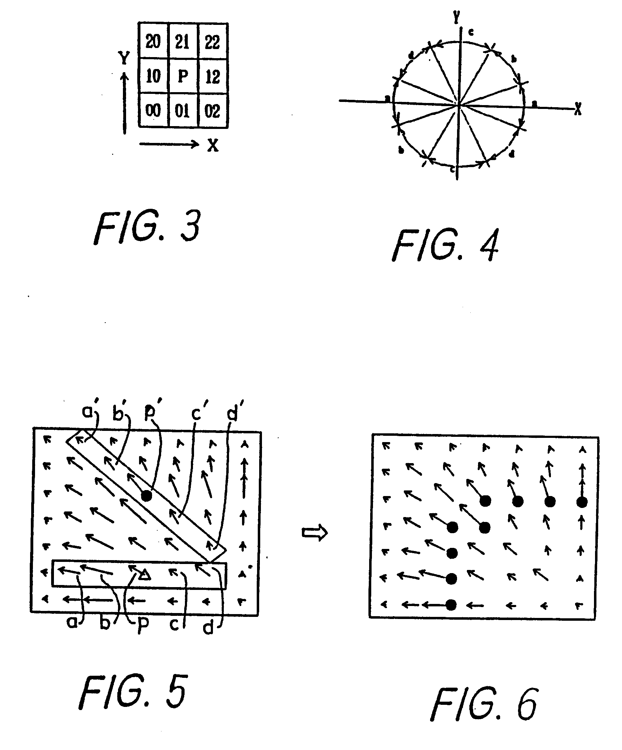

Fig. 1 illustrates part of a gray level distribution stored in a memory for a matrix of pixels arranged in two-dimensional grid designated by X and Y coordinates. For convenience, the X and Y coordinates of pixels are expressed by X1 to X6 and Y1 to Y5, and the numeral entered in each grid square represents the gray level of the corresponding pixel. In order to extract pattern contours from the image of Fig. 1, processing flow, for example, is as illustrated by the block diagram of Fig. 2. Image data, which is stored in a memory unit in image input section 1 and consists of address and gray level information, is subjected to X-directional differential calculator 31x and Y-direction differential calculator 31y, where gray level differentials Dx and Dy in X and Y directions are calculated. These component data items Dx, Dy are combined and input to two vector component calculators, because the gray level gradient forms a vector (the word "gradient" is now used instead of differential because a vector is being dealt with). The two component calculators consist of gradient magnitude calculator 32 and gradient direction calculator 33, where components Fp and Gp of a gray level gradient vector can be obtained. These data items are input to contour extractor 34, where calculations are carried out in respect of each pixel by comparing its gray level data with that of adjacent pixels. A comparison of gray level gradients is carried out in a direction of the gray level gradient vector of the pixel involved, and when the pixel is found to have a maximum gray level gradient, this pixel is regarded as one of the pixels forming a pattern contour and is distinguished from others. Details of the above steps will now be explained further by reference to Fig. 3. To explain calculation of Gray level differentials Dx and Dy in X-direction differential calculator 31x and Y-direction differential calculator 31y of Fig. 2, an array of 3 × 3 pixels, with 8 pixels denoted by X, Y coordinate pairs 00 to 22 surrounding a pixel P, will be considered. When the gray levels of the 8 "surrounding" pixels are denoted as L₀₀ to L₂₂ respectively, then the gray level differentials Dx and Dy in X and Y directions of pixel P are taken to have values in accordance with the following equations:

$\text{Dx = (L₂₂+L₁₂+L₀₂-L₂₀-L₁₀-L₀₀)/3,}$
$\text{Dy = (L₂₂+L₂₁+L₂₀-L₀₂-L₀₁-L₀₀)/3.}$

The values of Dx and Dy obtained from the above equations show the average X and Y direction differentials respectively, both differentials being sought between two groups of pixels located on opposite sides of pixel P. These values Dx and Dy are used as the components forming the gray level gradient of pixel P.

The gray level gradient is a quantity having magnitude and direction, forming a vector. Therefore, it is necessary to determine the absolute magnitude and direction of the gray level gradient vector, denoted respectively by Fp and Gp.

The magnitude Fp can be obtained in gray level gradient calculator 32 using the following relationship:-

${\text{Fp = (Dx²+Dy²)}}^{\text{½}} \text{.}$

Further, the direction Gp of the gray level gradient can be calculated in gradient direction calculator 33 using the following equations:-

$\text{Gp = Cos⁻¹(Dx/Fp) where Dy ≧ 0,}$
$\text{Gp = -Cos⁻¹(Dx/Fp) where Dy < 0.}$

To extract contour lines, it is necessary to perform the above calculation for each pixel which has a magnitude Fp greater than some specified value. For a pixel which has a magnitude Fp smaller than the specified value, particularly selected numerals such as 999, or the like, are output, and such pixels are regarded as irrelevant pixels so far as the pattern contour is concerned.

In this way, Fp and Gp values for each pixel are calculated in gray level gradient calculator 32 and gradient direction calculator 33 one by one sequentially.

Thereafter, utilizing the following algorithm, the pixels which form a pattern contour are selected and other pixels unsuitable for forming a pattern contour are excluded in contour extractor 34.

In contour extractor 34, Gp data is first grouped into eight groups in accordance with directions as shown in Fig. 4. A circumference is equally divided into 8 arcs, and references a, b, c, and d are given to respective arcs; two arcs located on opposite sides of the origin are given the same reference. An area bounded by two radii and an arc such as a, b, c, or d is a subject of investigation. Such an area is called a sector a, b, c, or d respectively. A positive X-axis direction is taken as a reference, and each sector is defined by the following conditions:
- sector a:: π/8 > Gp ≧ -π/8, and the region further rotated by an angle π,
- sector b:: 3π/8 > Gp ≧ π/8, and the region further rotated by an angle π,
- sector c:: 5π/8 > Gp ≧ 3π/8, and the region further rotated by an angle π, and
- sector d:: 7π/8 > Gp ≧ 5π/8, and the region further rotated by an angle π.

Depending on which sector a gray level gradient vector Gp is contained in, one of the following discriminating conditions is applied. A pixel satisfying the following conditions is regarded as one of the pixels forming a pattern contour.
(1) When Gp is contained in sectors a, the following two conditions are applied:

   $\text{Fp(x,y) ≧ Fp(x-1,y),}$
   and
   $\text{Fp(x,y) ≧ Fp(x+1,y).}$
(2) When Gp is contained in sectors b, the following two conditions are applied:

   $\text{Fp(x,y) ≧ Fp(x+1,y+1),}$
   and
   $\text{Fp(x,y) ≧ Fp(x-1,y-1).}$
(3) When Gp is contained in sectors c, the following two conditions are applied:

   $\text{Fp(x,y) ≧ Fp(x,y+1),}$
   and
   $\text{Fp(x,y) ≧ Fp(x,y-1).}$
(4) When Gp is contained in sectors d, the following two conditions are applied:

   $\text{Fp(x,y) ≧ Fp(x+1,y-1),}$
   and
   $\text{Fp(x,y) ≧ Fp(x-1,y+1).}$

Each of the above conditions amounts to testing whether or not the gray level magnitude Fp for pixel P (in Fig.3) has a maximum value among three pixels along its gradient direction Gp. If Fp is found to be maximum, the pixel P is judged to be on the pattern contour.

For example, the pixel located at grid coordinate (X3,Y3) in Fig. 1 has a gradient direction as indicated by an arrow and the gray level magnitudes of its two adjacent pixels (X2,Y4) and (X4,Y2) along the arrow are less than that of pixel P(X3,Y3), therefore pixel P is judged to be one of the pixels forming the pattern contour.

In the above explanation, comparison to determine maximum gray level magnitude value is performed with two adjoining pixels. However, in practical application, comparison may be performed among five to seven neighbouring pixels, to get more accuracy. This is schematically illustrated in Figs. 5 and 6. Each arrow is assumed to show the magnitude and direction of the gray level gradient vector of a corresponding pixel. In Fig. 5, when vector p is compared with four vectors a to d, it is found that vector b is maximus and vector p is less than vector b; therefore, it is judged that the pixel to which vector p relates is not on the pattern contour. When vector pʹ is compared with four vectors aʹ to dʹ, vector pʹ is found to be maximum and is judged that the corresponding pixel is on the pattern contour.

In this way, all pixels are subjected to discrimination procedures, and finally (Fig. 6) pixels judged to form the pattern contour are extracted. These pixels are marked.

In order to extract pattern contours, the procedures outlined above are repeated for all pixels, following the above algorithm. The discriminated pixels form the pattern contours. The procedures are written in program form and executed under program control. However, this requires a considerable amount of processing time and is not suitable for extracting pattern contours in real-time processing.

According to a first aspect of the present invention, there is provided a method of extracting pattern contours from an image made up of a plurality of pixels, each pixel having one of a plurality of gray levels, the method comprising:-
(a) calculating the magnitude and direction of a gray level gradient for each pixel;
(b) providing an X-axis representation of each pixel by discriminating the direction of the gray level gradient of the pixel, in which X-axis representation, if the direction of the gray level gradient of the pixel is judged to lie within a specified angular range of an X-axis direction, the calculated magnitude of the gray level gradient is retained, otherwise the gray level gradient magnitude is set to null;
(c) providing a Y-axis representation of each pixel by discriminating the direction of the gray level gradient of the pixel, in which Y-axis representation, if the direction of the gray level gradient is judged to lie within a specified angular range of a Y-axis direction, the calculated magnitude of the gray level gradient is retained, otherwise the gray level magnitude is set to null;
(d) discriminating the X-axis representation of each pixel, by comparing the gray level gradient magnitude of the X-axis representation of the pixel with the gray level gradient magnitudes of the X-axis representations of each of a set of neighbouring pixels, which pixels are located on opposite X-direction sides of the pixel being discriminated, and providing a first comparison output level when the X-axis representation magnitude of the pixel being discriminated is greater than or equal to the maximum X-axis representation magnitude of the set of neighbouring pixels, otherwise providing a second comparison output level;
(e) discriminating the Y-axis representation of each pixel, by comparing the gray level gradient magnitude of the Y-axis representation of the pixel with the gray level gradient magnitudes of the Y-axis representations of each of a group of neighbouring pixels, which pixels are located on opposite Y-direction sides of the pixel being discriminated, and providing a first comparison output level when the Y-axis representation magnitude of the pixel being discriminated is greater than or equal to the maximum Y-axis representation magnitude of the group of neighbouring pixels, otherwise providing a second comparison output level; and
(f) forming the pattern contours by pixels selected by logically summing comparison outputting levels provided by (d) and (e).

According to a second aspect of the invention, there is provided image processing apparatus, operable to extract pattern contours from an image made up of a plurality of pixels, each pixel having one of a plurality of gray levels, the apparatus comprising:-
(a) calculating circuitry, operable to calculate magnitude and direction of gray level gradient for each pixel;
(b) first discriminator circuitry, operable to provide an X-axis representation of each pixel by discriminating the direction of the gray level gradient of the pixel, in which X-axis representation, if the direction of the gray level gradient of the pixel is judged to lie within a specified angular range of an X-axis direction, the calculated magnitude of the gray level gradient is retained, otherwise the gray level gradient magnitude is set to null;
(c) second discriminator circuitry, operable to provide a Y-axis representation of each pixel by discriminating the direction of the gray level gradient of the pixel, in which Y-axis representation, if the direction of the gray level gradient is judged to lie within a specified angular range of a Y-axis direction, the calculated magnitude of the gray level gradient is retained, otherwise the gray level magnitude is set to null;
(d) first comparison circuitry, operable to discriminate the X-axis representation of each pixel, by comparing the gray level gradient magnitude of the X-axis representation of the pixel with the gray level gradient magnitudes of the X-axis representations of each of a set of neighbouring pixels, which pixels are located on opposite X-direction sides of the pixel being discriminated, and providing a first comparison output level when the X-axis representation magnitude of the pixel being discriminated is greater than or equal to the maximum X-axis representation magnitude of the set of neighbouring pixels, otherwise providing a second comparison output level;
(e) second comparison circuitry, operable to discriminate the Y-axis representation of each pixel, by comparing the gray level gradient magnitude of the Y-axis representation of the pixel with the gray level gradient magnitudes of the Y-axis representations of each of a group of neighbouring pixels, which pixels are located on opposite Y-direction sides of the pixel being discriminated, and providing a first comparison output level when the Y-axis representation magnitude of the pixel being discriminated is greater than or equal to the maximum Y-axis representation magnitude of the group of neighbouring pixels, otherwise providing a second comparison output level; and
(f) logic circuitry, operable to logically sum comparison output levels provided by (d) and (e).

An embodiment of the invention can provide a method of extracting contour lines with high speed. An embodiment of the present invention can provide apparatus wherein real-time processing is possible.

Embodiments of the present invention can provide method and apparatus for obtaining contour lines in real-time with high speed, and provide that procedures can be partly incorporated into hardware.

With parts of procedures incorporated into hardware as far as possible, a higher speed of processing is attainable.

Embodiments of the present invention can also provide method and apparatus for extracting contour lines with increased accuracy.

In an embodiment of the present invention, a simplified discrimination method is used for selecting a pixel having a maximum magnitude of gray level gradient vector. Gray level gradient vectors are grouped into X-axis and Y-axis groups and comparison of magnitude (for selection) is performed among pixels located along either an X-axis direction or a Y-axis direction.

In order to discriminate whether or not a specific pixel is one of the pixels forming a pattern contour, the gray level data of the pixel which is the subject of discrimination and of neighbouring pixels is first input to X and Y differential calculators, and then to gradient magnitude and gradient direction calculators in a manner similar to the previously proposed method described above. Because gray level gradient is a vector quantity, magnitude Fp and direction Gp of gray level gradient must be calculated for subsequent processes.

Next, on the basis of gray level gradient vectors a division into two groups is effected, i.e. an X-axis group and a Y-axis group. When a specific pixel has an angle Gp in either of the ranges ± 45° and 180° ± 45° with reference to the X-axis, this pixel is processed subsequently as belonging to an X-axis group. When a specific pixel has an angle Gp in either of the ranges of 90° ± 45° and 270° ± 45° with reference to the X-axis, this pixel is processed subsequently as belonging to a Y-axis group.

In order to extract the pixels forming the pattern contour, a pixel having a maximum magnitude Fp among adjacent (neighbouring) pixels should be selected. This extraction procedure can be carried out by comparing the Fp data of the pixel which is the subject of discrimination with that of neighbouring pixels arranged in either X-directions or in Y-directions from the pixel which is the subject of discrimination (but not in both X and Y directions). This is quite different from the previous method, wherein comparison is performed along the direction of gray level gradient.

Further, to make it easier to discriminate the pixel having maximum magnitude Fp, in an embodiment of the invention, a maximum value filter and a comparator are used for the X-axis and the Y-axis groups respectively. A maximum value filter has the function of providing that the magnitude Fp of a subject pixel or, in other words, a centre pixel (hereinafter, the pixel the subject of discrimination is called, briefly, the centre pixel), is replaced by a maximum magnitude Fpmx in the case of X-axis group pixels, where Fpmx means the maximum value of Fp occurring over a plurality of pixels located to left and right sides of (that is, in X-directions from) the centre pixel. In a case of Y-axis group pixels, replacement by a maximum magnitude Fpmy is effected, with Fpmy relating to pixels located in Y-directions.

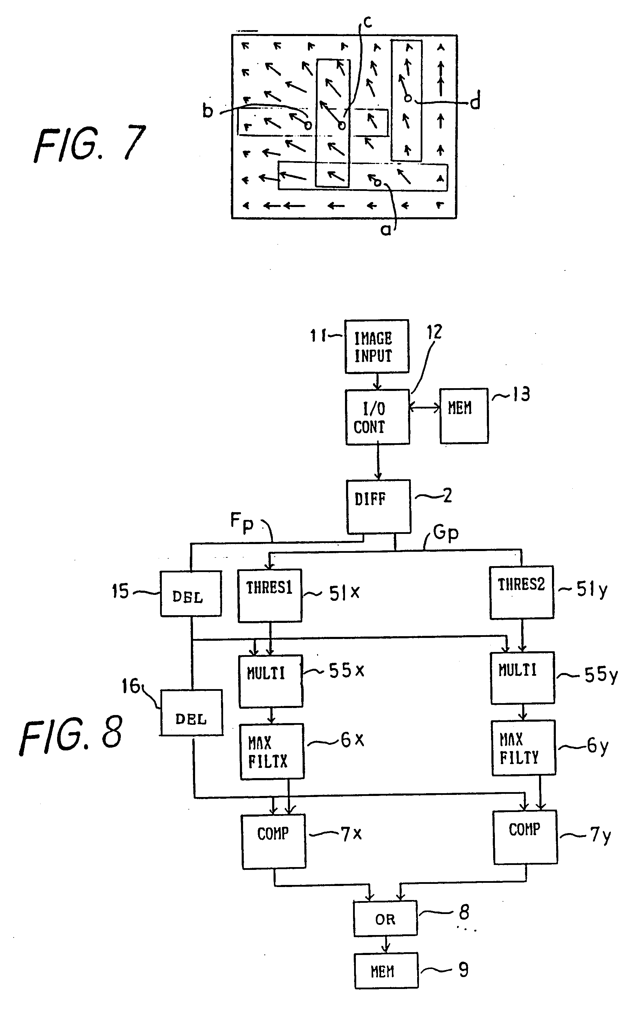

Fig. 7 shows schematically the directions in which comparison of gray level gradient magnitude is performed for a few selected pixels. Vectors of pixels a and b belong to the X-axis group whilst vectors at pixels c and d belong to the Y-axis group.

In this way, gray level gradient magnitude data for each pixel is transformed to a maximum value of Fpm found among neighbouring pixels in X- or Y-directions for X-axis or Y-axis groups respectively. Then, the transformed data of the centre pixel is compared with its original Fp value in comparators, and when Fpmx or Fpmy is equal to Fp, logical "1" is generated in respect of this pixel, otherwise logical "0" is given. This comparison process eliminates a complex procedure of the previously proposed method described above in extracting and forming the pattern contour.

Finally, both output logical signals, from the two comparators, are input to a logical sum circuit (OR circuit), where two components of the pattern contour are combined and output to pattern contour memory.

In the previously proposed method described above, angle Gp of a specific pixel is first subjected to the step of discriminating to which sector it belongs, among four sector groups a to d as shown in Fig. 4. When the sector is determined, the pixel magnitude Fp is compared with the magnitudes of neighbouring pixels located along the same direction of Gp. When the Fp is found to have the maximum value, the specific pixel is determined to be one of the pixels forming a pattern contour.

In an embodiment of the present invention, pixels are grouped into an X-axis group and a Y-axis group in accordance with the directions of their gray level gradient vectors. Namely, pixels in one group are processed in X-directions and pixels in the other are processed in Y-directions. For example, for a pixel having its gray level gradient direction comprised in the range of angles ± 45° with respect to X-axis, replacement of Fp by Fpmx and the related comparison procedure are carried out only in relation to the X-directions. Processing to determine a pixel which has a maximum value can be made simple and easy. A thus selected pixel is then taken to be a pixel forming a pattern contour. A similar procedure is used in relation to pixels belonging to the Y-axis group. Outputs relating to the two groups are combined, giving the required pattern contour.

The present invention is concerned with processing techniques for extracting the contours of an image, and therefore, monochrome (e.g. black and white) images are of primary interest. In embodiments of the present invention, multiple gray levels, for example more than 10 gray levels, may be dealt with in image processing. Because it is very easy to extract pattern contours from the image which is formed with binary gray levels (only black or white levels) - but see above -processing of binary level image data is not a real concern of the present invention.

Reference is made, by way of example, to the accompanying drawings, in which:-
Fig. 1 schematically illustrates a distribution of gray level data for pixels arranged in a matrix with two-dimensional grid coordinates;
Fig. 2 is a block diagram illustrating extraction of pattern contours in accordance with a previously proposed method;
Fig. 3 schematically illustrates a 3 x 3 matrix of pixels for assistance in explanation of the calculation of differentials;
Fig. 4 illustrates the directions of gray level gradient vectors grouped into eight sectors, in X,Y coordinates;
Fig. 5 illustrates comparison of the magnitudes of gray level gradient vectors p or pʹ in the previously proposed method;
Fig. 6 schematically illustrates an example of a contour extracted by means of processing as explained with reference to Fig. 5;
Fig. 7 illustrates schematically a feature of processing in an embodiment of the present invention, wherein directions of gray level gradient vectors are grouped into X-axis and Y-axis groups;
Fig. 8 is a schematic block diagram of apparatus in accordance with a first embodiment of the present invention;
Fig. 9 is a more detailed block diagram of a differential and vector component calculator 2 of Fig. 8;
Figs. 10(a) and 10(b) illustrate filter matrixes used for calculation of X-differential Dx and Y-differential Dy respectively.
Figs. 11(a) to 11(l) illustrate very schematically the output patterns at various points in Fig. 8,wherein Fig. 11(a) illustrates an input image pattern Fig. 11(b) magnitude of gray level gradient; Fig. 11(c) direction of gray level gradient vectors; Figs. 11(d) and 11(e) outputs from threshold processors 51x and 51y; Figs. 11(f) and 11(g) outputs from products circuits 55x and 55y; Figs. 11(h) and 11(i) outputs from maximum value filters 6x and 6y;
Figs.11(j) and 11(k) outputs from comparators 7x and 7y; and Fig. 11(l) an output pattern contour;
Figs. 12(a) and 12(b) are schematic block diagrams showing more detailed circuitry of threshold processors 51x and 51y of Fig. 8;
Figs. 13(a) and 13(b) are schematic block diagrams showing more detailed circuitry of maximum value filters 6x and 6y of Fig. 8;
Fig. 14 illustrates schematically the function of maximum value filter 6x and comparator 7x of Fig. 8;
Fig. 15 is a schematic block diagram of apparatus in accordance with another embodiment of the present invention;
Figs. 16(a) and 16(b) are schematic block diagrams showing in more detail circuitry of maximum point detection circuits 40x and 40y of Fig. 15;
Fig. 17 schematically illustrates a difficulty which may be encountered in the operation of the apparatuses of Figs. 8 and 15.
Fig. 18 is a schematic block diagram of apparatus in accordance with a further embodiment of the present invention, and
Fig. 19 to Fig. 25 are schematic block diagrams illustrating in more detail parts of the apparatus of Fig. 18; Fig. 19 shows a right maximum discriminator circuit; Fig. 20 a right minimum discriminator circuit; Fig. 21 a left maximum discriminator circuit; Fig. 22 a left minimum discriminator circuit; Fig. 23 an up maximum discriminator circuit; and Fig. 25 a five-input comparator circuit.

A block diagram of a first embodiment of the present invention is shown in Fig. 8. Pattern data obtained by an image input device 11, such as a TV camera, is input to an input-and-output (I/O) controller 12 and stored in a memory unit 13. The pattern data is then input to a differential and vector component calculator 2. This calculator 2 includes differential calculators for X and Y directions, and vector magnitude and vector direction calculators (more details are given below).

X-direction and Y-direction differentials Dx and Dy are first calculated in X-direction and Y-direction differential calculators respectively. Next, both Dx and Dy data are input to a gradient magnitude calculator, where the Fp value of (D×²+Dy²)½ is calculated, and also input to a gradient direction calculator, where the direction angle of the gray level gradient vector is calculated. The above procedures are similar to steps as explained in relation to the previously proposed method described above.

Next, gray level gradient vector direction data (Gp) is input to two threshold processors 51x and 51y. When the angle Gp of the direction data is found to be comprised in the ranges ± 45° or 180° ± 45° with reference to the X-axis, in other words for a pixel of the X-axis group, threshold processor 51x outputs logical "1" and threshold processor 51y outputs logical "0". When the angle Gp is found to be comprised in the ranges 90° ± 45° or 270° ± 45° with reference to the X-axis (for a pixel of the Y-axis group), threshold processor 51y outputs logical "1" and threshold processor 51x outputs logical "0".

Further, the above logical data and the vector magnitude Fp is input to two product circuits 55x and 55y and multiplied therein. Here, Fp data is input through delay circuit 15, because the Fp data inputs to the product circuits are to be synchronous with outputs from the threshold processors. Therefore, a product circuit (55x or 55y) outputs Fp only when it receives logical "1" signal from its associated threshold processor (51x or 55y). The output data is then subjected to processing in maximum value filters 6x and 6y.

Maximum value filter 6x has a function to replace the magnitude Fp of the centre pixel (for example of address ADDxy) being processed by a maximum magnitude Fpmx, which is the maximum magnitude value of pixels located serially to left and right sides of the centre pixel of address ADDxy, for example pixels of addresses ADD(x-n)y to ADD(x+n)y, and thus the Fp value of pixel ADDxy is replaced by Fpmx and is output to comparator 7x. Maximum value filter 6y has a similar function with regard to a Y-axis group pixel, and magnitude Fp is there replaced by a maximum value Fpmy, which is output to comparator 7y.

The output maximum value Fpmx or Fpmy for the centre pixel is compared in comparators 7x or 7y with the original Fp value of the centre pixel. In this process, Fpmx or Fpmy is synchronized with Fp by delay circuit 16, and when Fpmx or Fpmy is equal to Fp, then logical "1" is generated in respect of the centre pixel, otherwise logical "0" is given. Comparisons are effected pixel by pixel sequentially.

The above processes eliminate a complex procedure of the previously proposed method described above involved in extracting the pixel having a maximum value and forming a part of a pattern contour.

Finally, both output logical signals from comparators 7x and 7y are input to a logical sum circuit 8 (OR circuit), where two components of the pattern contour (one, X-axis group, having angle Gp of gray level gradient vector in the ranges ± 45° and 180° ± 45° with reference to X-axis and another, Y-axis group, in the ranges 90° ± 45° and 270° ± 45°), are combined, forming a completed pattern contour. The pattern contour data is stored in pattern contour memory 9.

Basic units such as differential and vector component calculator 2, threshold processors 51x and 51y, and maximum value filters 6x and 6y, in Fig. 8 will be further explained below.

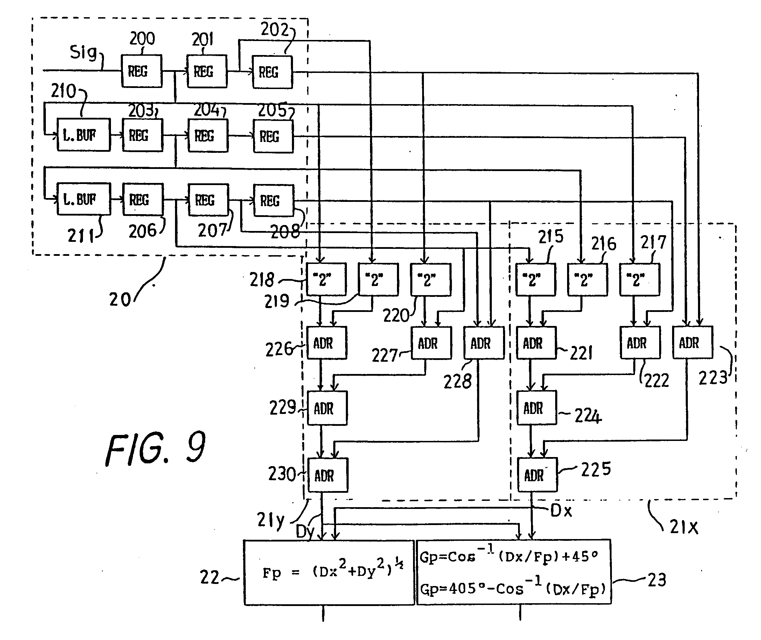

Fig. 9 is a more detailed block diagram of differential and vector component calculator 2 of Fig. 8. Image pattern data, output from memory unit 13 of Fig. 8, is input to the differential and vector component calculator. Memory unit 13 has an address size, for example, of 512 x 512 pixels, each address having a memory capacity of 8 bits, and image information signals Sig of eight bits, corresponding to the gray level of respective pixels, are input sequentially to a register 200 in a window buffer circuit 20, which consists of registers 200, 201 to 208, and line buffers 210 and 211 as shown in Fig. 9. The registers are arranged to form a 3 x 3 matrix. Each register has a bit length of eight bits, corresponding to the pixel data length. When a data signal Sig is input to register 200, previously stored data is shifted to register 201, and so on.

Line buffers 210 and 211 function to provide that the data stored in the 3 x 3 register matrix corresponds to a window (a specific portion) of the pattern image. Therefore, in this case, each line buffer has a capacity for storing data relating to N-1 pixels in a row. The data relating to the pixel whose differential is to be calculated is stored in the centre register 204 of the matrix. Data relating to other neighbouring pixels for calculation of differentials is stored in registers 200, 201, 202, 203, 205, 206, 207 and 208.

In the above explanation, nine registers are used. Depending on the calculation method used for obtaining differentials, the number of registers and line buffers can be changed. Sometimes, a 4 x 4 or a 5 x 5 pixel matrix is used for calculation.

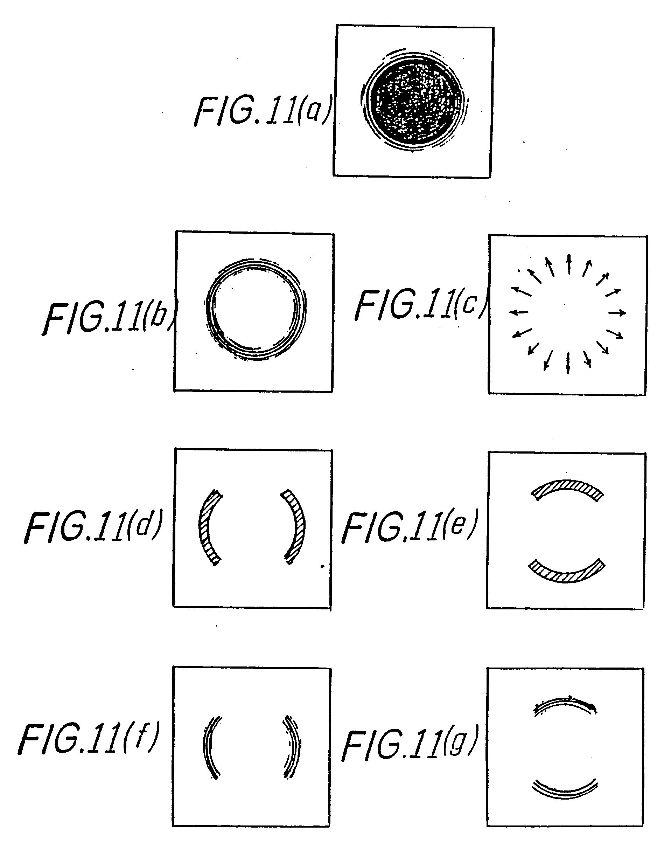

Outputs from window buffer circuit 20 are connected to X-direction differential calculator 21x and Y-direction differential calculator 21y. Each differential calculator consists of three complement operators and five adders. Each of the complement operators 215 to 217, or 218 to 220 functions to output a complement of two (two's complement), in other words, to output input data with reversed sign. With regard to the X-direction differential calculator 21x, data relating to three pixels in a column on the right side of register matrix are added and, further, reversed data relating to three pixels in a column on the left side of the matrix are added thereto (this corresponds to subtraction of unreversed data) one by one. This is performed by five adders 221 to 225. X-direction differential calculator 21x has a function similar to that of filtering the matrix image data with a filter as illustrated in Fig. 10(a), resulting in the provision of Dx. In a similar way, Y-direction differential calculator 21y, having adders 226 to 330, has a function similar to that of calculating Dy and filtering with a filter as illustrated in Fig. 10(b).

Both Dx and Dy data are then input to a gradient magnitude calculator 22 and a gradient direction calculator 23. In gradient magnitude calculator 22, absolute magnitude data Fp is calculated from the following equation:

${\text{Fp = (Dx²+Dy²)}}^{\text{½}} \text{.}$

In gradient direction calculator 23, Gp data is calculated from the following equations:

$\text{Gp = Cos⁻¹(Dx/Fp) + 45°}$ where Dy ≧ 0,
$\text{Gp = 45° - Cos⁻¹(Dx/Fp)}$ where Dy < 0.

If both Dx and Dy data are less than some specified value in the above process, the data is abandoned for the purpose of extracting a pattern contour and, in this case, special data such as "999" is output.

The above equations are similar to those mentioned in relation to the previously proposed method described above except that the Gp value has 45° added to it, to facilitate judgement in subsequent threshold processors. In order to distinguish gray level gradient vectors having direction angles in the ranges ± 45° and 180° ± 45° (X-axis group) in the original coordinates, the above equations transform the angle ranges to 0° - 90°, and 180° - 270°. As a result, discrimination in threshold processors becomes easy.

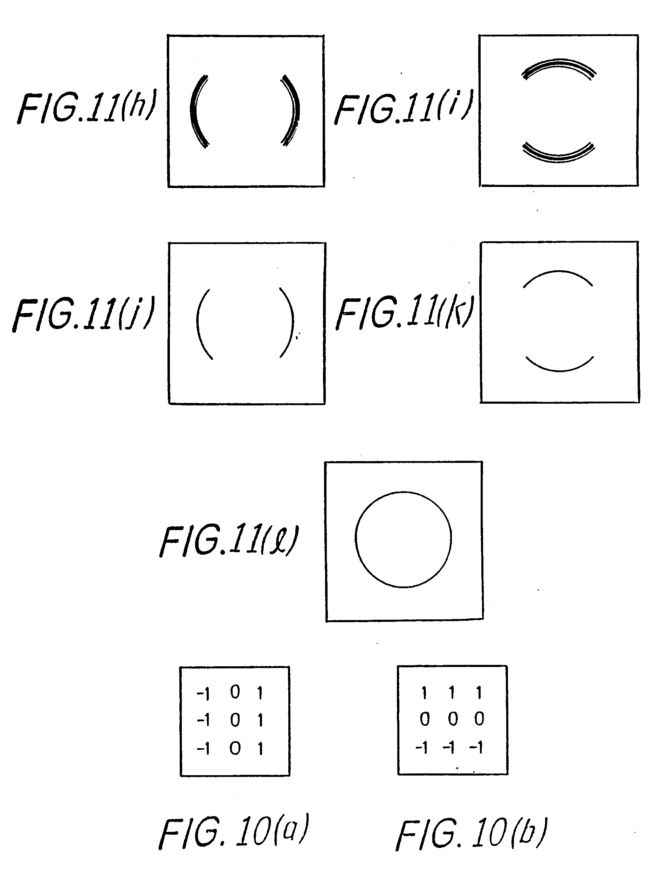

When the pattern, contour lines of which are to be extracted, is assumed to be as shown in Fig. 11(a), the outputs of Fp and Gp from gradient magnitude calculator 22 and gradient direction calculator 23 are as schematically illustrated in Figs. 11(b) and 11(c) respectively. The Figures are indeed schematic, because of difficulty of illustrating magnitude and direction in a two-dimensional representation. Especially in Fig. 11(b), magnitude Fp is only very crudely and unclearly indicated by the density of the lined regions around concentric circles. In an actual case, the centre portion of concentric circles should exhibit the darkest region which means the magnitude thereof is maximum and it changes gradually.

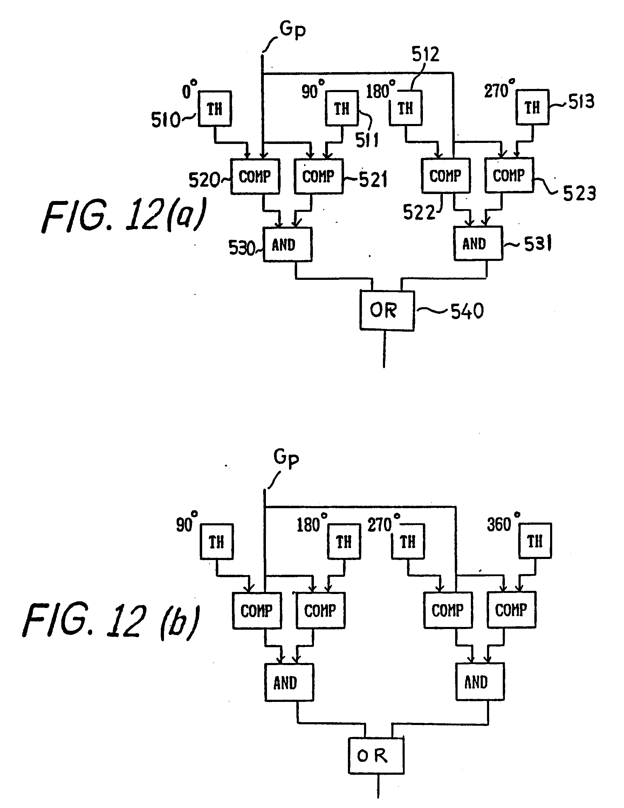

Gp data is then input to threshold processors 51x and 51y, the processors being as shown in Fig. 12(a) and Fig. 12(b) respectively. In threshold processor 51x, angle data Gp is compared in comparators 520 and 521 with threshold values 0° and 90°, data being given by threshold registers 510 and 511. When Gp is found to be between 0° and 90°, AND circuit 530 outputs, for example, logical "1". Similarly, threshold registers 512, 513 and comparators 522, 523 provide that AND circuit 531 outputs logical "1" when Gp is found to be between 180° and 270°. Both outputs are input to OR circuit 540, therefore, OR circuit 540 outputs logical "1" when Gp is comprised in ranges 0° to 90° and 180° to 270°. This means that the Gp direction is comprised in the ranges of ± 45° and 180° ± 45° in terms of the original coordinates.

In the same way, threshold processor 51y shown in Fig. 12(b) functions to output, for example, logical "1", when the Gp direction is comprised in the ranges 90° ± 45° and 270° ± 45° (in the original coordinates). Image patterns of two outputs form threshold processors 51x and 51y are schematically shown in Figs. 11(d) and 11(e) respectively. In the hatched regions, data of logical "1" is output.

The logical data from the threshold processors is multiplied in the product circuits 55x and 55y of Fig. 8, resulting in the output of Fp data in the selected two regions corresponding to the above logical "1" regions of Figs. 11(d) and 11(e). The results are shown in schematically in Figs. 11(f) and 11(g).

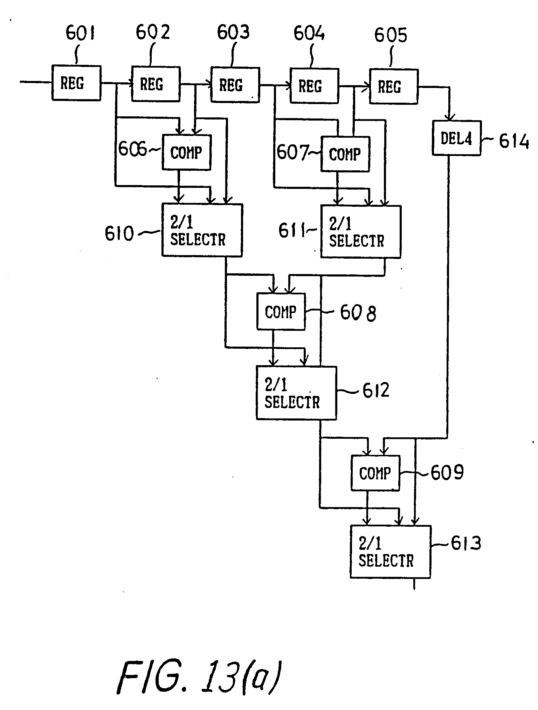

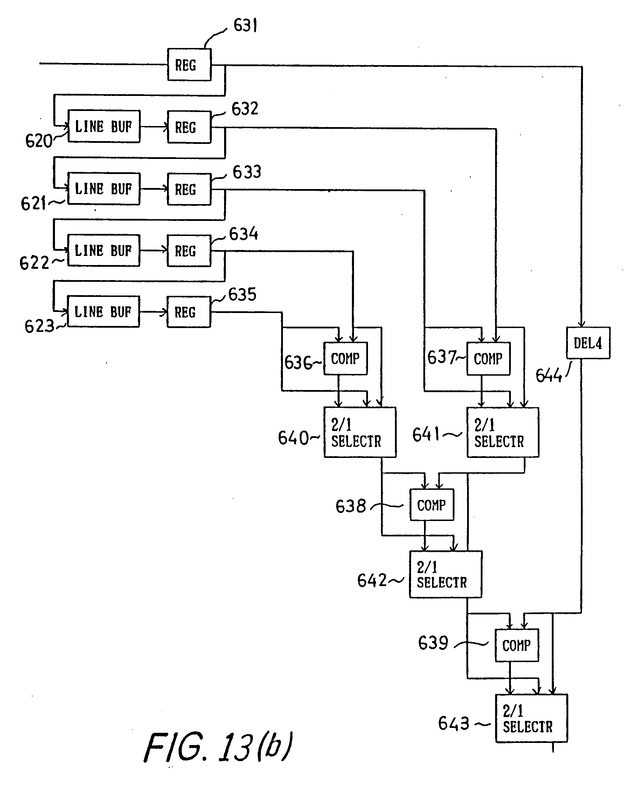

The output from each product circuit 55x or 55y is processed in a maximum value filter. Maximum value filter 6x, for X-components, is shown in Fig. 13(a), and maximum value filter 6y, for Y-components, is shown in Fig. 13(b).

When Fp data for the X-axis group is input to registers 601, 602, 603, 604, and 605 sequentially in Fig. 13(a), comparator 606 and selector 610 have the function of outputting the larger Fp value of two neighbouring pixels (whose pixel data is stored in registers 601 and 602). In the same way, the larger Fp value of two pixels whose pixel data is stored in registers 603 and 604 (compared in comparator 600) is output from selector 611. Fp outputs from selectors 610 and 611 are then compared in comparator 607 and the larger one is output from selector 612. Finally, this output is further compared with Fp data stored in register 605 and output through delay circuit 614, and the largest Fp value among the five Fp values is obtained from selector 613.

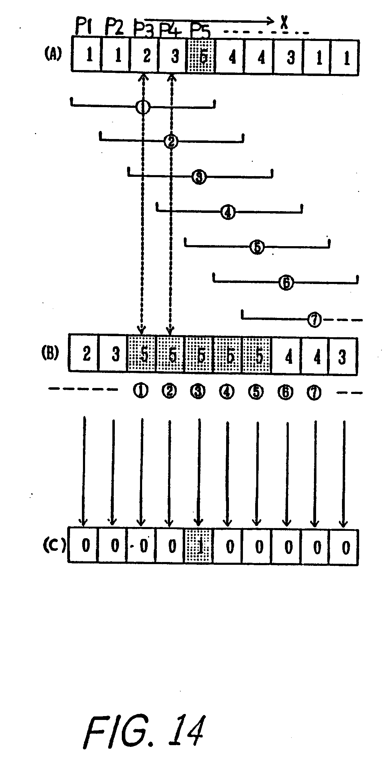

If Fp data values before the filtering process are assumed to be numerical values as shown in the upper row (A) in Fig. 14, and pixel P3 having Fp data "2" is compared with data of pixels P1, P2, P4 and P5, these latter pixels being located on both left and right sides of pixel P3, then the Fp value of P3 is converted to the maximum value of pixels P1 to P5, in this case, "5". After every pixel is processed in this way, a series of Fp values shown in the upper row (A) is converted to a series of numerical values as shown in the middle row (B) in Fig. 14. Output data shown in row (B) is further compared with the original data shown in row (A), and logical "1" is generated when, in relation to a pixel under consideration, the same magnitude appears in both cases, otherwise logical "0" is given in comparator 7x of Fig. 8. The result is shown in the lower row (C) in fig. 14.

Maximum value filter 6y has a similar function to filter 6x, except that it deals with Y-direction components, which necessitates four line buffers 620 to 623 shown in Fig. 13(b). Other components such as registers 631 to 635, comparators 636 to 639, selectors 640 to 643, and delay circuit 644 have the same functions as similar items in Fig. 13(a).

Output image patterns from maximum value filters 6x and 6y are schematically shown in Figs. 11(h) and 11(i). Further, output image patterns from comparators 7x and 7h are schematically shown in Figs. 11(j) and 11(k) respectively, the former showing pattern contours in the ranges ± 45° and 180° ± 45° with regard to the X-axis, and the latter in the ranges 90° ± 45° and 270° ± 45°.

Two image patterns are combined in OR circuit 8 in Fig. 8, resulting in the output of a contour pattern as shown in Fig. 11(l), and stored in pattern contour memory 9.

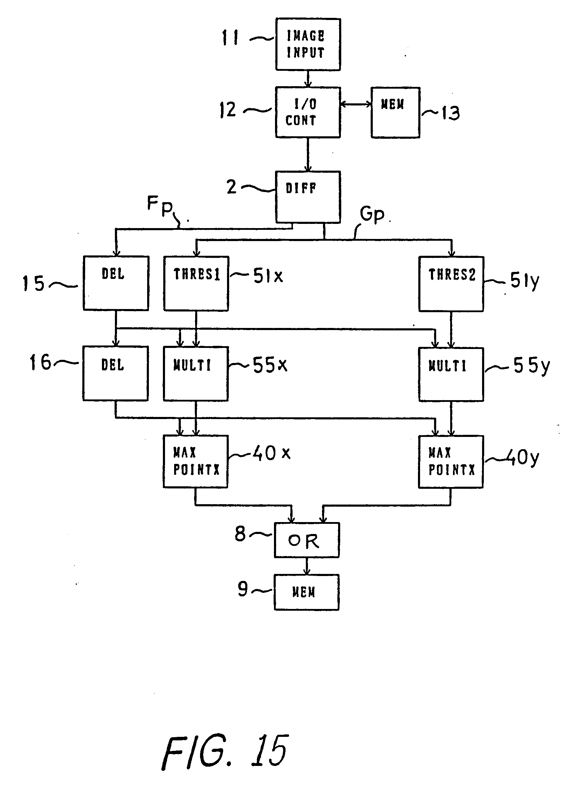

A block diagram of another embodiment of the present invention is shown in Fig. 15. The same reference signs as used in Fig. 8 designate and identify the units having similar functions. The only difference from Fig. 8 is related to the units used for discriminating a pixel having a maximum magnitude among neighbouring pixels.

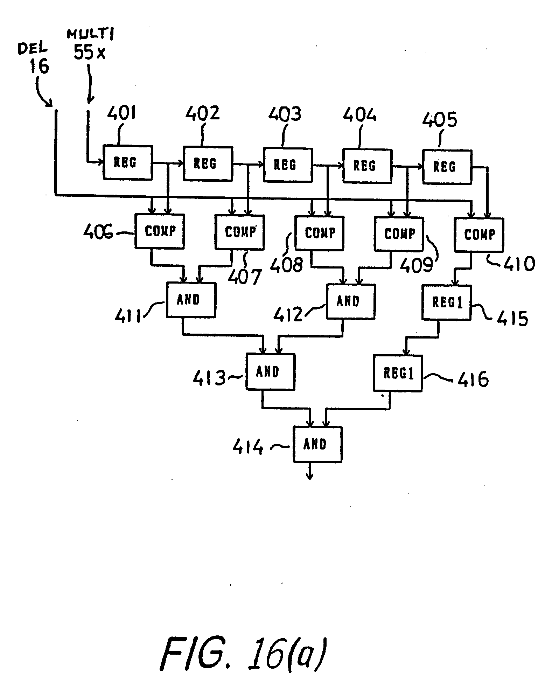

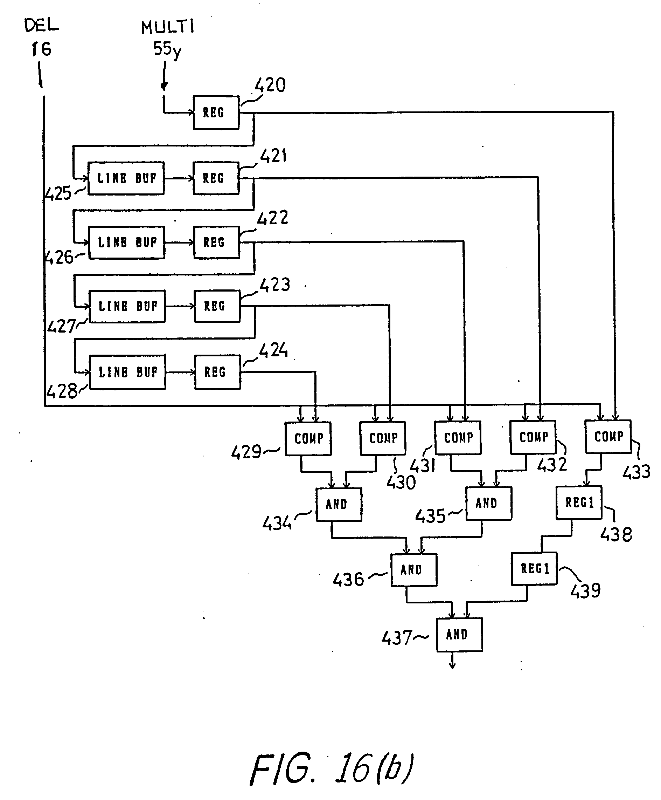

In this embodiment of the invention, outputs of product circuits 55x and 55y and magnitude data Fp of gray level gradient vectors are input to maximum point detection circuits 40x and 40y respectively. Maximum point detection circuit 40x for the X-axis group is shown in Fig. 16(a), and maximum point detection circuit 40y for the Y-axis group is shown in Fig. 16(b).

In Fig. 16(a), the output from product circuit 55x is sequentially input to registers 401 to 405, Fp data of the centre pixel (to be subject to discrimination), input from delay circuit 16, is compared in comparators 406 to 410 with data relating to 5 pixels, including those input before and after the centre pixel. Each comparator outputs logical "1" when the leftside input signal is equal to or larger than the rightside signal in Fig. 16(a). Five outputs from comparators 406 to 410 are processed through AND circuits 411 to 414 and delay circuits 415, 416, and finally AND circuit 414 outputs logical "1" when Fp data of the centre pixel is equal to or larger than the maximum (Fp) value of five pixels arranged in X-directions.

Maximum point detection circuit 40y shown in Fig. 16(b) has similar functions to those explained above except that the comparisons and detection are performed in Y-directions. Output data from product circuit 55y is first arranged in Y-directions using registers 420 to 424 and line buffers 425 to 428, then subsequently comparisons and detections are performed in comparators 429 to 433, AND circuits 434 to 437, and delay circuits 438 and 439, and finally AND circuit 437 outputs logical "1" when Fp data of the centre pixel is equal to or larger than the maximum Fp value of five pixels arranged in Y-directions.

Outputs of maximum point detection circuits 40x and 40y for X- and Y-directions respectively are combined in OR circuit 8 of Fig. 15, resulting in the output of completed pattern contours.

In the embodiments of the invention described above, extraction of pattern contours may become inaccurate when a plurality of pixels having the same magnitude of gray level gradient are continuously arranged in the direction of a discriminating process.

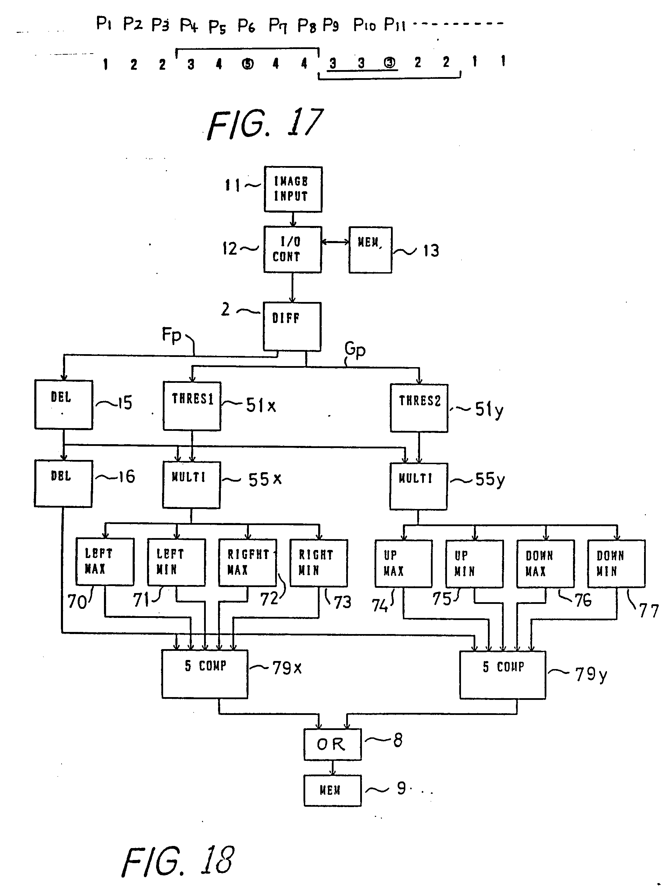

For example, a series of magnitude data values of gray level gradient for 15 pixels arranged in the X-direction is assumed to be as shown in Fig. 17. Pixels P9, P10, and P11 have the same magnitude data "3". When pixels P6 and P11 are subjected to comparison and discrimination processes among neighbouring 5 x 1 pixels as explained in the previous embodiment of the invention, both pixels P6 and P11, having magnitudes of "5" and "3" respectively, are selected as pixels forming a pattern contour. Pixel P6 has a magnitude of "5", and this is the maximum magnitude and larger than that of any other of pixels P4 to P8, therefore, P6 is suitable for a pattern contour. However, P11 is arranged with two neighbouring pixels P9 and P10 having the same magnitude "3", therefore, P11 may be unsuitable for forming a pattern contour, because P11 is not the only pixel having the maximum magnitude.

To improve this situation, it is better to include the following conditions in the process for extracting pattern contour. Namely, in addition to the condition that the centre pixel subject to discrimination should have the maximum magnitude of gray level gradient among neighbouring pixels (of specified number and lying in specified directions), it is required that there exists a pixel, the magnitude of which is less than that of the centre pixel, located on each side of the centre pixel. With regard to Fig. 17, pixel P6 has neighbouring pixels, the magnitude thereof being less than "5", on both left and right sides. However, pixel P11 has no neighbouring pixel on the left side, of which the magnitude is less than "3". Therefore, P11 would not, with the additional condition, be judged eligible for forming part of a pattern contour.

A block diagram of the further embodiment of the present invention is shown in Fig. 18. The same reference signs as used in Figs. 8 and 15 designate and identify the similar units having the similar functions. The difference exists in maximum and minimum discriminator circuits 70 to 77 and two five-input comparators 79x and 79y.

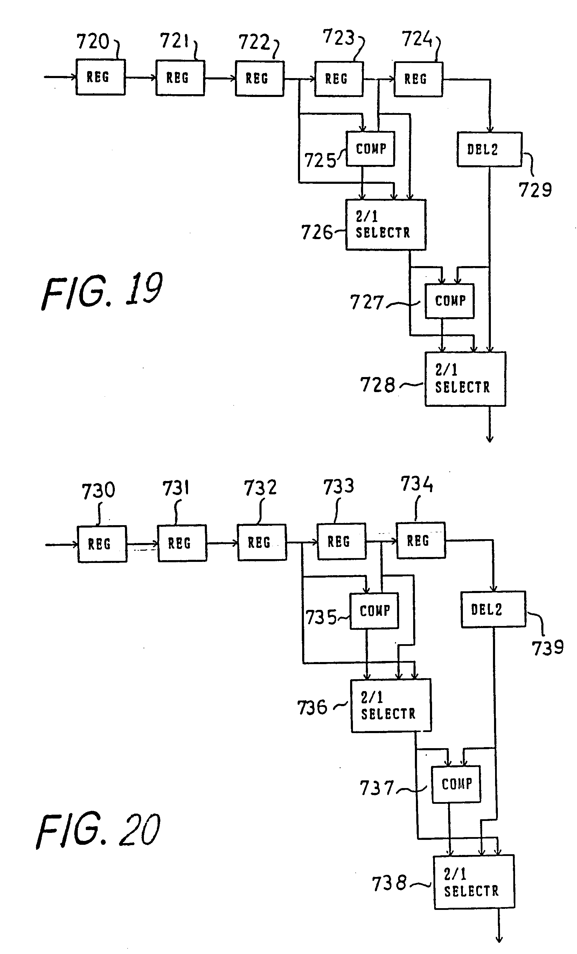

Details of right maximum discriminator circuit 72 are shown in Fig. 19. Gray level gradient signals are sequentially input to registers 720 to 724, and the signal levels from register 722 and register 723 are compared in comparator 725. Comparator 725 and selector 726 have the same general functions as comparators and selectors explained previously. Namely, when the signal level from register 722 is greater than or equal to the signal level from register 723, then comparator 725 outputs logical "1". In this case, selector 726 outputs a signal which has the same level as the signal output from register 722. Comparator 727 and selector 728 have the similar functions, and finally, selector 728 outputs the maximum level of gray level gradient among three pixels consisting of the centre pixel and two rightside neighbouring pixels. Delay circuit 729 provides necessary delay.

Right minimum discriminator circuit 73 is shown in Fig. 20. Registers 730 to 734, comparators 735 and 737, and selectors 736 and 738 and delay circuit 739 have similar functions to those explained in Fig. 19 except that terminal positions of input signals to selectors are reversed. Therefore, right minimum discriminator circuit 73 outputs the minimum level of gray level gradient for the three pixels consisting of the centre pixel and two rightside neighbouring pixels.

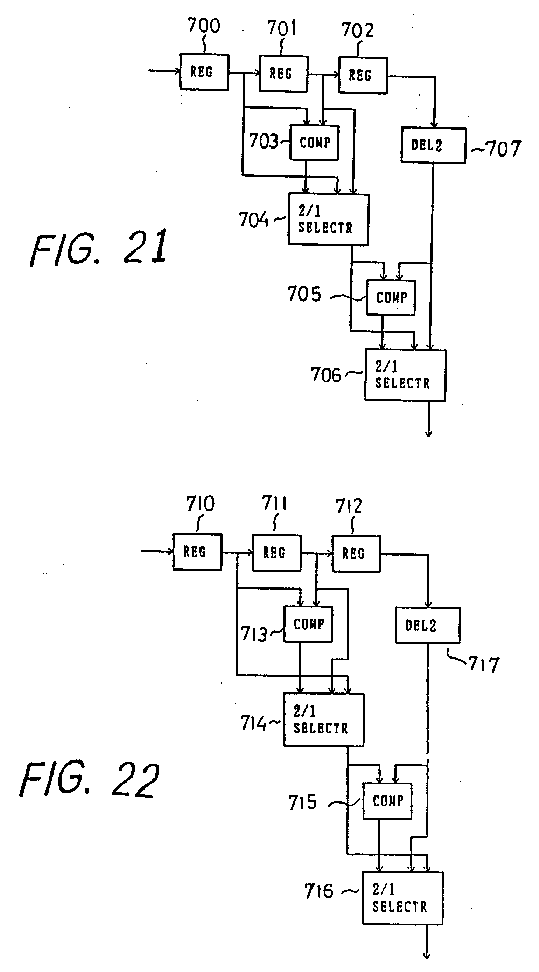

Figs. 21 and 22 shown left maximum discriminator circuit 70 and left minimum discriminator circuit 71 respectively. Left maximum discrimin:ator circuit 70 has three registers 700 to 702, two comparators 703 and 705, two selectors 704 and 706 and delay circuit 707. The reason why three registers are used, rather than five registers in Figs. 19 and 20, is that the discrimination procedures with regard to the centre pixel need to be synchronous on both sides thereof. The discriminator circuit 70 functions to output the maximum gray level gradient among the centre pixel and two leftside neighbouring pixels. Similarly, the left minimum discriminator circuit 71 of Fig. 22 has three registers 710 to 712, two comparators 713 and 715, two selectors 714 and 716 and delay circuit 717 and functions to output the minimum gray level gradient among the centre pixel and two leftside neighbouring pixels.

Up maximum discriminator circuit 74, up minimum discriminator circuit 75, down maximum discriminator circuit 76, and down minimum discriminator circuit 77 have similar functions to the discriminator circuits of Figs. 19 to 22 except that these circuits deal with processes in Y-axis directions. Therefore, details are shown representatively only for up maximum discriminator circuit 74 and down maximum discriminator 76.

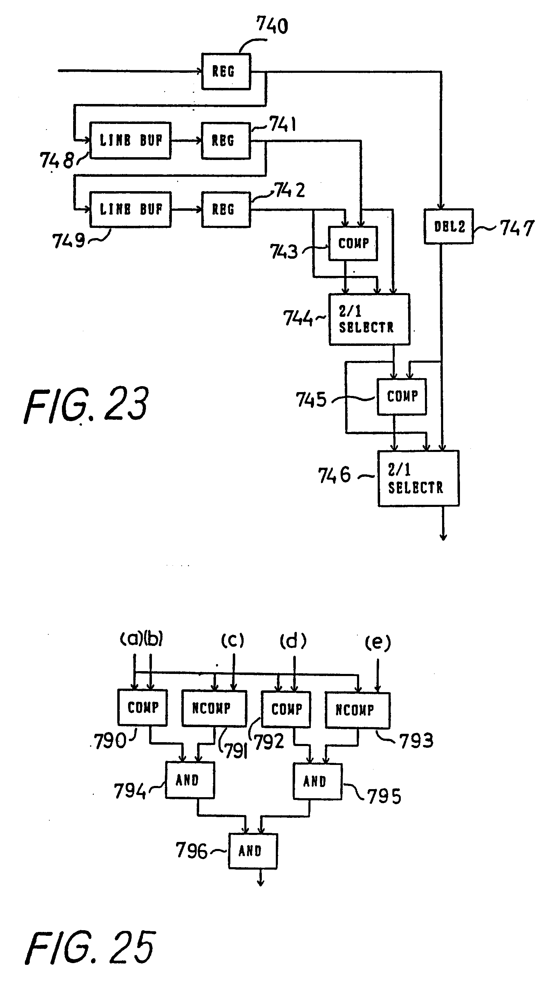

Fig. 23 is a block diagram of up maximum discriminator circuit 74, having three registers 740 to 742, two comparators 743 and 745, two selectors 744 and 746, delay circuit 747, and two line buffers 748 and 749. There are differences from Figs. 19 and 21 in view of the fact that the input gray level gradient signals are processed through registers and line buffers because of the need to arrange data in Y-axis directions.

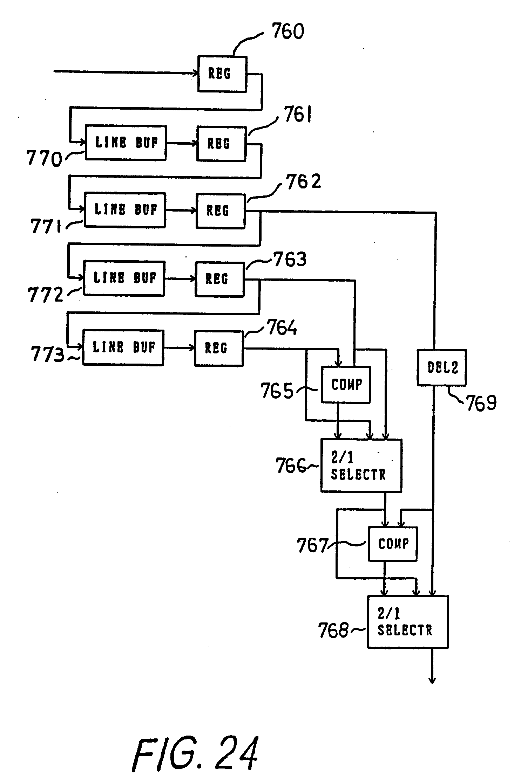

Fig. 24 is a block diagram of down maximum discriminator circuit 76, having five registers 760 to 764, two comparators 765 and 767, two selectors 766 and 768, delay circuit 769, and four line buffers 770 to 773. The difference between Figs. 23 and 24 lies in the number of registers and line buffers, because discrimination processes should be performed synchronously with regard to the data arranged in upside and downside directions.

Up minimum discriminator circuit 75 and down minimum discriminator circuit 77 are almost the same as those shown in Figs. 23 and 24 respectively except that terminal positions of input signals to selectors are reversed so that minimum values are delivered. Therefore, detailed block diagrams are omitted.

Output signals from discriminator circuits 70 to 73 and 74 to 77 are input to five-input comparators 79x and 79y respectively, where the gray level gradient of the centre pixel is compared to determine whether or not the centre pixel has a maximum magnitude of gray level gradient among neighbouring pixels arranged on both sides of the centre pixel, and whether or not the gray level gradient of the centre pixel is greater than the minimum magnitude of reighbouring pixels arranged on each side of the centre pixel (in other words, to determine whether or not there is a pixel, the magnitude thereof being less than that of the centre pixel, located on each side of the centre pixel). When these conditions are satisfied, the centre pixel is judged to be a pixel forming part of a pattern contour.

Five-input comparator 79x is representatively shown in Fig. 25, where four comparators and three AND circuits are used. In Fig. 25, two comparators 790 and 792 have a function as explained previously, i.e. function to output logical "1" when the leftside signal is greater than or equal to the rightside signal, however, two comparators 791 and 793 have a function to output logical "1" only when the leftside input signal is greater than the rightside signal.

In a case of five-input comparator 79x of Fig. 25, terminal (a) is connected to delay circuit 16 of Fig. 18; terminal (b) to left maximum discriminator circuit 70; terminal (c) to left minimum discriminator circuit 71; terminal (d) to right maximum discriminator circuit 72; and terminal (e) to right minimum discriminator circuit 73.

When the gray level gradient signal of the centre pixel is equal to or greater than the output of left maximum discriminator circuit 70 and is also greater than the output of left minimum discriminator circuit 71, both comparators 790 and 791 output logical "1", and AND circuit 794 outputs logical "1". Further, when the gray level gradient signal of the centre pixel is equal to or greater than the output of right maximum discriminator circuit 72 and is also greater than the output of right minimum discriminator circuit 73, both comparators 792 and 793 output logical "1", and AND circuit 795 outputs logical "1". Finally AND circuit 796 outputs logical "1". The above conditions show that the centre pixel satisfies the conditions of forming part of a contour line. Five-input comparator 79y has the same function as 79x except that the direction is related to the Y-axis.

Outputs from two five-input comparators 79x and 79y are combined in an OR circuit in Fig. 18 forming the completed pattern contour, and are stored in memory unit 9.

The present invention can provide method and apparatus for extracting contour lines from a pattern obtained in image processing, with which it is possible to obtain contour lines real-time with a high speed and, moreover, which can easily make use of hardware. In embodiments of the invention a simplified discrimination method for selecting those pixels which form the pattern contour is employed. Pixels are grouped into two groups, X-axis and Y-axis groups, and the magnitude of gray level gradient of each pixel is compared with those of neighbouring pixels lying in either X-axis directions or Y-axis directions with respect to the pixel under consideration, and the pixel which has the maximum magnitude of gray level gradient among those neighbouring pixels is discriminated in each group. This discrimination method is simple and can offer remarkable improved processing. When contour lines determined for the two groups are combined, pattern contours can be easily obtained.

## Claims

1. A method of extracting pattern contours from an image made up of a plurality of pixels, each pixel having one of a plurality of gray levels, the method comprising:-
(a) calculating the magnitude and direction of a gray level gradient for each pixel;
(b) providing an X-axis representation of each pixel by discriminating the direction of the gray level gradient of the pixel, in which X-axis representation, if the direction of the gray level gradient of the pixel is judged to lie within a specified angular range of an X-axis direction, the calculated magnitude of the gray level gradient is retained, otherwise the gray level gradient magnitude is set to null;
(c) providing a Y-axis representation of each pixel by discriminating the direction of the gray level gradient of the pixel, in which Y-axis representation, if the direction of the gray level gradient is judged to lie within a specified angular range of a Y-axis direction, the calculated magnitude of the gray level gradient is retained, otherwise the gray level magnitude is set to null;
(d) discriminating the X-axis representation of each pixel, by comparing the gray level gradient magnitude of the X-axis representation of the pixel with the gray level gradient magnitudes of the X-axis representations of each of a set of neighbouring pixels, which pixels are located on opposite X-direction sides of the pixel being discriminated, and providing a first comparison output level when the X-axis representation magnitude of the pixel being discriminated is greater than or equal to the maximum X-axis representation magnitude of the set of neighbouring pixels, otherwise providing a second comparison output level;
(e) discriminating the Y-axis representation of each pixel, by comparing the gray level gradient magnitude of the Y-axis representation of the pixel with the gray level gradient magnitudes of the Y-axis representations of each of a group of neighbouring pixels, which pixels are located on opposite Y-direction sides of the pixel being discriminated, and providing a first comparison output level when the Y-axis representation magnitude of the pixel being discriminated is greater than or equal to the maximum Y-axis representation magnitude of the group of neighbouring pixels, otherwise providing a second comparison output level; and
(f) forming the pattern contours by pixels selected by logically summing comparison outputting levels provided by (d) and (e).

2. A method of extracting pattern contours according to claim 1, said discriminating steps (d) and (e) further comprising respectively the steps of:-
(d') replacing the magnitude of gray level gradient of each pixel with the maximum magnitude of gray level gradient among said set of neighbouring pixels in the X-direction, and comparing the original magnitude of said pixel with said replaced magnitude, and outputting said first comparison output level for said pixel when the original magnitude is the same as said replaced magnitude, otherwise outputting said second comparison output level; and
(e') replacing the magnitude of gray level gradient of each pixel with the maximum magnitude of gray level gradient among said group of neighbouring pixels in the Y-direction, and comparing the original magnitude of said pixel with said replaced magnitude, and outputting said first comparison output level for said pixel when the original magnitude is the same as said replaced magnitude, otherwise outputting said second comparison output level.

3. A method of extracting pattern contours according to claim 1 or 2, wherein the condition for outputting said first comparison output level in steps (d) and (e) further includes that the magnitude of gray level gradient of said pixel is greater than the minimum magnitude of the pixels in said set in the X-direction for step (d) and in said group in the Y-direction for step (e) respectively.

4. A method of extracting pattern contours according to any preceding claim, wherein step (a) further comprises a step of outputting a special code for a pixel, the magnitude of gray level gradient of which is less than a specified value.

5. A method of extracting pattern contours according to any preceding claim, wherein said specified angular range in steps (b) and (c) is defined as ±45° and 180° ±45° for the X-axis direction and 90° ±45° and 270° ±45° for the Y-axis direction.

6. Image processing apparatus, operable to extract pattern contours from an image made up of a plurality of pixels, each pixel having one of a plurality of gray levels, the apparatus comprising:-
(a) calculating circuitry, operable to calculate magnitude and direction of gray level gradient for each pixel;
(b) first discriminator circuitry, operable to provide an X-axis representation of each pixel by discriminating the direction of the gray level gradient of the pixel, in which X-axis representation, if the direction of the gray level gradient of the pixel is judged to lie within a specified angular range of an X-axis direction, the calculated magnitude of the gray level gradient is retained, otherwise the gray level gradient magnitude is set to null;
(c) second discriminator circuitry, operable to provide a Y-axis representation of each pixel by discriminating the direction of the gray level gradient of the pixel, in which Y-axis representation, if the direction of the gray level gradient is judged to lie within a specified angular range of a Y-axis direction, the calculated magnitude of the gray level gradient is retained, otherwise the gray level magnitude is set to null;
(d) first comparison circuitry, operable to discriminate the X-axis representation of each pixel, by comparing the gray level gradient magnitude of the X-axis representation of the pixel with the gray level gradient magnitudes of the X-axis representations of each of a set of neighbouring pixels, which pixels are located on opposite X-direction sides of the pixel being discriminated, and providing a first comparison output level when the X-axis representation magnitude of the pixel being discriminated is greater than or equal to the maximum X-axis representation magnitude of the set of neighbouring pixels, otherwise providing a second comparison output level;
(e) second comparison circuitry, operable to discriminate the Y-axis representation of each pixel, by comparing the gray level gradient magnitude of the Y-axis representation of the pixel with the gray level gradient magnitudes of the Y-axis representations of each of a group of neighbouring pixels, which pixels are located on opposite Y-direction sides of the pixel being discriminated, and providing a first comparison output level when the Y-axis representation magnitude of the pixel being discriminated is greater than or equal to the maximum Y-axis representation magnitude of the group of neighbouring pixels, otherwise providing a second comparison output level; and
(f) logic circuitry, operable to logically sum comparison output levels provided by (d) and (e).

7. Apparatus according to claim 6, wherein said first and second comparison circuitries respectively comprise:-
means for replacing the gray level gradient magnitude of each pixel with the maximum gray level gradient magnitude among said set of neighbouring pixels in the X-direction, and comparing the original magnitude of said pixel with said replaced magnitude, and outputting a first comparison output level for said pixel when the original magnitude is the same as said replaced magnitude, otherwise outputting a second comparison output level; and
means for replacing the magnitude of gray level gradient of each pixel with the maximum gray level gradient magnitude among said group of neighbouring pixels in the Y-direction, and comparing the original magnitude of said pixel with said replaced magnitude, and outputting a first comparison output level for said pixel when the original magnitude is the same as said replaced magnitude, otherwise outputting a second comparison output level.

8. Apparatus according to claim 6 or 7, wherein said first and second comparison circuitries respectively comprise:-
means for discriminating each pixel for the X-direction by comparing the gray level gradient magnitude of said pixel with the minimum magnitude of said set of neighbouring pixels in the X-direction; and
means for discriminating each pixel for the Y-direction by comparing the gray level gradient magnitude of said pixel with the minimum magnitude of said group of neighbouring pixels in the Y-direction.

9. Apparatus as claimed in claim 6, 7 or 8, wherein all said circuitries are hard-wired.

## Patentansprüche

1. Ein Verfahren zum Extrahieren von Musterkonturen von einem Bild, das aus einer Vielzahl von Pixels besteht, wobei jedes Pixel eine von einer Vielzahl von Graustufen hat, welches Verfahren umfaßt:-
(a) Berechnen der Größe und Richtung eines Graustufengradienten für jedes Pixel;
(b) Vorsehen einer X-Achsen-Darstellung jedes Pixels durch Unterscheiden der Richtung des Graustufengradienten des Pixels, bei welcher X-Achsen-Darstellung die berechnete Größe des Graustufengradienten beibehalten wird, falls beurteilt wird, daß die Richtung des Graustufengradienten des Pixels innerhalb eines spezifischen Winkelbereichs einer Richtung der X-Achse liegt, andernfalls die Graustufengradientengröße auf null gesetzt wird;
(c) Vorsehen einer Y-Achsen-Darstellung jedes Pixels durch Unterscheiden der Richtung des Graustufengradienten des Pixels, bei welcher Y-Achsen-Darstellung die berechnete Größe des Graustufengradienten beibehalten wird, falls beurteilt wird, daß die Richtung des Graustufengradienten des Pixels innerhalb eines spezifischen Winkelbereichs einer Richtung der Y-Achse liegt, andernfalls die Graustufengradientengröße auf null gesetzt wird;
(d) Unterscheiden der X-Achsen-Darstellung jedes Pixels durch Vergleichen der Graustufengradientengröße der X-Achsen-Darstellung des Pixels mit den Graustufengradientengrößen der X-Achsen-Darstellungen von jedem eines Satzes von benachbarten Pixels, welche Pixels auf gegenüberliegenden Seiten der X-Richtung des unterschiedenen Pixels angeordnet sind, und Vorsehen eines ersten Vergleichsausgabepegels, wenn die Größe der X-Achsen-Darstellung des unterschiedenen Pixels größer als oder gleich der maximalen Größe der X-Achsen-Darstellung des Satzes von benachbarten Pixels ist, andernfalls Vorsehen eines zweiten Vergleichsausgabepegels;
(e) Unterscheiden der Y-Achsen-Darstellung jedes Pixels durch Vergleichen der Graustufengradientengröße der Y-Achsen-Darstellung des Pixels mit den Graustufengradientengroßen der Y-Achsen-Darstellungen von jedem einer Gruppe von benachbarten Pixels, welche Pixels auf gegenüberliegenden Seiten der Y-Richtung des unterschiedenen Pixels angeordnet sind, und Vorsehen eines ersten Vergleichsausgabepegels, wenn die Größe der Y-Achsen-Darstellung des unterschiedenen Pixels größer als oder gleich der maximalen Größe der Y-Achsen-Darstellung der Gruppe von benachbarten Pixels ist, andernfalls Vorsehen eines zweiten Vergleichsausgabepegels;
(f) Bilden der Musterkonturen durch Pixels, die durch logisches Summieren von Vergleichsausgabepegeln, die durch (d) und (e) bereitgestellt wurden, ausgewählt wurden.

2. Ein Verfahren zum Extrahieren von Musterkonturen nach Anspruch 1, bei dem die Unterscheidungsschritte (d) und (e) ferner entsprechend die Schritte umfassen:-
(d') Ersetzen der Größe des Graustufengradienten jedes Pixels durch die maximale Größe des Graustufengradienten von dem genannten Satz von benachbarten Pixels in der X-Richtung, und Vergleichen der ursprünglichen Größe des genannten Pixels mit der genannten Ersatzgröße, und Ausgeben des genannten ersten Vergleichsausgabepegels für das genannte Pixel, wenn die ursprüngliche Größe dieselbe wie die genannte Ersatzgröße ist, andernfalls Ausgeben des genannten zweiten Vergleichsausgabepegels; und
(e') Ersetzen der Größe des Graustufengradienten jedes Pixels durch die maximale Größe des Graustufengradienten von der genannten Gruppe von benachbarten Pixels in der Y-Richtung, und Vergleichen der ursprünglichen Größe des genannten Pixels mit der genannten Ersatzgröße, und Ausgeben des genannten ersten Vergleichsausgabepegels für das genannte Pixel, wenn die ursprüngliche Größe dieselbe wie die genannte Ersatzgröße ist, andernfalls Ausgeben des genannten zweiten Vergleichsausgabepegels.

3. Ein Verfahren zum Extrahieren von Musterkonturen nach Anspruch 1 oder 2, bei dem die Bedingung zum Ausgeben des genannten ersten Vergleichsausgabepegels bei den Schritten (d) und (e) ferner einschließt, daß die Größe des Graustufengradienten des genannten Pixels größer als die minimale Größe der Pixels in dem genannten Satz in der X-Richtung für Schritt (d) bzw. in der genannten Gruppe in der Y-Richtung für Schritt (e) ist.

4. Ein Verfahren zum Extrahieren von Musterkonturen nach einem der vorhergehenden Ansprüche, bei dem Schritt (a) ferner einen Schritt des Ausgebens eines speziellen Kodes für ein Pixel umfaßt, dessen Größe des Graustufengradienten kleiner als ein spezifischer Wert ist.

5. Ein Verfahren zum Extrahieren von Musterkonturen nach einem der vorhergehenden Ansprüche, bei dem der genannte spezifische Winkelbereich bei den Schritten (b) und (c) als ±45° und 180° ±45° für die Richtung der X-Achse und 90° ±45° und 270° ±45° für die Richtung der Y-Achse definiert ist.

6. Bildverarbeitungsvorrichtung, die betriebsfähig ist, um Musterkonturen von einem Bild zu extrahieren, das aus einer Vielzahl von Pixels besteht, wobei jedes Pixel eine von einer Vielzahl von Graustufen hat, welche Vorrichtung umfaßt:-
(a) eine Berechungsschaltungsanordnung, die betriebsfähig ist, um Größe und Richtung des Graustufengradienten für jedes Pixel zu berechnen;
(b) eine erste Unterscheidungsschaltungsanordnung, die betriebsfähig ist, um eine X-Achsen-Darstellung jedes Pixels durch Unterscheiden der Richtung des Graustufengradienten des Pixels vorzusehen, bei welcher X-Achsen-Darstellung die berechnete Größe des Graustufengradienten beibehalten wird, falls beurteilt wird, daß die Richtung des Graustufengradienten des Pixels innerhalb eines spezifischen Winkelbereichs einer Richtung der X-Achse liegt, andernfalls wird die Graustufengradientengröße auf null gesetzt;
(c) eine zweite Unterscheidungsschaltungsanordnung, die betriebsfähig ist, um eine Y-Achsen-Darstellung jedes Pixels durch Unterscheiden der Richtung des Graustufengradienten des Pixels vorzusehen, bei welcher Y-Achsen-Darstellung die berechnete Größe des Graustufengradienten beibehalten wird, falls beurteilt wird, daß die Richtung des Graustufengradienten des Pixels innerhalb eines spezifischen Winkelbereichs einer Richtung der Y-Achse liegt, andernfalls die Graustufengradientengröße auf null gesetzt wird;
(d) eine erste Vergleichsschaltungsanordnung, die betriebsfähig ist, um die X-Achsen-Darstellung jedes Pixels zu unterscheiden, durch Vergleichen der Graustufengradientengröße der X-Achsen-Darstellung des Pixels mit den Graustufengradientengrößen der X-Achsen-Darstellungen von jedem eines Satzes von benachbarten Pixels, welche Pixels auf gegenüberliegenden Seiten der X-Richtung des unterschiedenen Pixels angeordnet sind, und Bereitstellen eines ersten Vergleichsausgabepegels, wenn die Größe der X-Achsen-Darstellung des unterschiedenen Pixels größer als oder gleich der maximalen Größe der X-Achsen-Darstellung des Satzes von benachbarten Pixels ist, andernfalls Bereitstellen eines zweiten Vergleichsausgabepegels;
(e) eine zweite Vergleichsschaltungsanordnung, die betriebsfähig ist, um die Y-Achsen-Darstellung jedes Pixels zu unterscheiden, durch Vergleichen der Graustufengradientengröße der Y-Achsen-Darstellung des Pixels mit den Graustufengradientengrößen der Y-Achsen-Darstellungen von jedem einer Gruppe von benachbarten Pixels, welche Pixels auf gegenüberliegenden Seiten der Y-Richtung des unterschiedenen Pixels angeordnet sind, und Bereitstellen eines ersten Vergleichsausgabepegels, wenn die Größe der Y-Achsen-Darstellung des unterschiedenen Pixels größer als oder gleich der maximalen Größe der Y-Achsen-Darstellung der Gruppe von benachbarten Pixels ist, andernfalls Bereitstellen eines zweiten Vergleichsausgabepegels; und
(f) eine Logikschaltungsanordnung, die betriebsfähig ist, um Vergleichsausgabepegel, die durch (d) und (e) bereitgestellt wurden, logisch zu summieren.

7. Vorrichtung nach Anspruch 6, bei der die genannten ersten und zweiten Vergleichsschaltungsanordnungen jeweils umfassen:-
Mittel zum Ersetzen der Graustufengradientengröße jedes Pixels durch die maximale Graustufengradientengröße von dem genannten Satz von benachbarten Pixels in der X-Richtung, und zum Vergleichen der ursprünglichen Größe des genannten Pixels mit der genannten Ersatzgröße, und zum Ausgeben eines ersten Vergleichsausgabepegels für das genannte Pixel, wenn die ursprüngliche Größe dieselbe wie die genannte Ersatzgröße ist, andernfalls zum Ausgeben eines zweiten Vergleichsausgabepegels; und
Mittel zum Ersetzen der Größe des Graustufengradienten jedes Pixels durch die maximale Graustufengradientengröße von der genannten Gruppe von benachbarten Pixels in der Y-Richtung, und zum Vergleichen der ursprünglichen Größe des genannten Pixels mit der genannten Ersatzgröße, und zum Ausgeben eines ersten Vergleichsausgabepegels für das genannte Pixel, wenn die ursprüngliche Größe dieselbe wie die genannte Ersatzgröße ist, andernfalls zum Ausgeben eines zweiten Vergleichsausgabepegels.

8. Vorrichtung nach Anspruch 6 oder 7, bei der die genannten ersten und zweiten Vergleichsschaltungsanordnungen jeweils umfassen:-
Mittel zum Unterscheiden jedes Pixels für die X-Richtung durch Vergleichen der Graustufengradientengröße des genannten Pixels mit der minimalen Größe des genannten Satzes von benachbarten Pixels in der X-Richtung; und
Mittel zum Unterscheiden jedes Pixels für die Y-Richtung durch Vergleichen der Graustufengradientengröße des genannten Pixels mit der minimalen Größe der genannten Gruppe von benachbarten Pixels in der Y-Richtung;

9. Vorrichtung nach Anspruch 6, 7 oder 8, bei der alle genannten Schaltungsanordnungen festverdrahtet sind.

## Revendications

1. Un procédé d'extraction de contours de configurations à partir d'une image formée par un ensemble de pixels, chaque pixel ayant un niveau parmi un ensemble de niveaux de gris, le procédé comprenant les étapes suivantes :
(a) on calcule la norme et la direction d'un gradient de niveau de gris pour chaque pixel;
(b) on produit une représentation d'axe X de chaque pixel en déterminant la direction du gradient de niveau de gris du pixel, et dans cette représentation d'axe X, si l'on juge que la direction du gradient de niveau de gris du pixel se trouve à l'intérieur d'une plage angulaire spécifiée d'une direction d'axe X, on retient la norme calculée du gradient de niveau de gris, tandis que dans le cas contraire on fixe à zéro la norme du gradient de niveau de gris;
(c) on produit une représentation d'axe Y de chaque pixel en déterminant la direction du gradient de niveau de gris du pixel, et dans cette représentation d'axe Y, si on juge que la direction du gradient de niveau de gris se trouve à l'intérieur d'une plage angulaire spécifiée d'une direction Y, on retient la norme calculée du gradient de niveau de gris, tandis que dans le cas contraire on fixe à zéro la norme du niveau de gradient de gris;
(d) on effectue une discrimination portant sur la représentation d'axe X de chaque pixel, en comparant la norme du gradient de niveau de gris de la représentation d'axe X du pixel avec les normes de gradient de niveau de gris des représentations d'axe X de chaque pixel parmi un ensemble de pixels voisins, ces pixels se trouvant sur des côtés opposés, dans la direction X, du pixel sur lequel porte la discrimination, et on produit un premier niveau de sortie de comparaison lorsque la norme de la représentation d'axe X du pixel sur lequel porte la discrimination est supérieure ou égale à la norme maximale de la représentation d'axe X de l'ensemble de pixels voisins, tandis que dans le cas contraire on produit un second niveau de sortie de comparaison;
(e) on effectue une discrimination portant sur la représentation d'axe Y de chaque pixel, en comparant la norme du gradient de niveau de gris de la représentation d'axe Y du pixel avec les normes des gradients de niveau de gris des représentations d'axe Y de chaque pixel d'un groupe de pixels voisins, ces pixels se trouvant sur des côtés opposés dans la direction Y, par rapport au pixel sur lequel porte la discrimination, et on produit un premier niveau de sortie de comparaison lorsque la norme de la représentation d'axe Y du pixel sur lequel porte la discrimination est supérieure ou égale à la norme maximale des représentations d'axe Y du groupe de pixels voisins, tandis que dans le cas contraire on produit un second niveau de sortie de comparaison et
(f) on forme les contours de configurations avec des pixels sélectionnés en faisant la somme logique de niveaux de sortie de comparaison qui sont produits par les étapes (d) et (e).

2. Un procédé d'extraction de contours de configurations selon la revendication 1, dans lequel les étapes de discrimination (d) et (e) comprennent en outre respectivement les étapes suivantes :
(d') on remplace la norme du gradient du niveau de gris de chaque pixel par la norme maximale du gradient de niveau de gris parmi l'ensemble de pixels voisins dans la direction X, et on compare la norme d'origine du pixel considéré avec la norme remplacée, et on émet le premier niveau de sortie de comparaison pour le pixel considéré lorsque la norme d'origine est identique à la norme remplacée, tandis que dans le cas contraire on émet le second niveau de sortie de comparaison; et
(e') on remplace la norme du gradient de niveau de gris de chaque pixel par la norme maximale du gradient de niveau de gris dans le groupe de pixels voisins dans la direction Y, et on compare la norme d'origine du pixel considéré avec la norme remplacée, et on émet le premier niveau de sortie de comparaison pour le pixel considéré lorsque la norme d'origine est identique à la norme remplacée, tandis que dans le cas contraire on émet le second niveau de sortie de comparaison.

3. Un procédé d'extraction de contours de configurations selon la revendication 1 ou 2, dans lequel la condition pour l'émission du premier niveau de sortie de comparaison aux étapes (d) et (e) comprend en outre le fait que la norme du gradient de niveau de gris du pixel considéré soit supérieure à la norme minimale des pixels dans le groupe considéré dans la direction X pour l'étape (d), et dans le groupe considéré dans la direction Y pour l'étape (e), respectivement.

4. Un procédé d'extraction de contours de configurations selon l'une quelconque des revendications précédentes, dans lequel l'étape (a) comprend en outre une étape qui consiste à émettre un code spécial pour un pixel dont la norme du gradient de niveau de gris est inférieure à une valeur spécifiée.

5. Un procédé d'extraction de contours de configurations selon l'une quelconque des revendications précédentes, dans lequel la plage angulaire spécifiée aux étapes (b) et (c) est définie comme étant égale à ±45° et à 180° ±45° pour la direction d'axe X, et égale à 90° ±45° et à 270° ±45° pour la direction d'axe Y.

6. Appareil de traitement d'image, pouvant fonctionner de façon à extraire des contours de configurations à partir d'une image qui est formée par un ensemble de pixels, chaque pixel ayant un niveau parmi un ensemble de niveaux de gris, cet appareil comprenant :
(a) un circuit de calcul, capable de calculer la norme et la direction du gradient de niveau de gris pour chaque pixel;
(b) un premier circuit de détermination, capable de produire une représentation d'axe X de chaque pixel, en déterminant la direction du gradient de niveau de gris du pixel, et dans cette représentation d'axe X, si l'on juge que la direction du gradient de niveau de gris du pixel est contenue à l'intérieur d'une plage angulaire spécifiée d'une direction d'axe X, on retient la norme calculée du gradient de niveau de gris, tandis que dans le cas contraire on fixe à zéro la norme du gradient de niveau de gris;
(c) un second circuit de détermination, capable de produire une représentation d'axe Y de chaque pixel en déterminant la direction du gradient de niveau de gris du pixel, et dans cette représentation d'axe Y, si l'on juge que la direction du gradient de niveau de gris se trouve à l'intérieur d'une plage angulaire spécifiée d'une direction d'axe Y, on retient la norme calculée du gradient de niveau de gris, tandis que dans le cas contraire on fixe à zéro la norme de gradient de niveau de gris;
(d) un premier circuit de comparaison, capable d'effectuer une discrimination portant sur la représentation d'axe X de chaque pixel, en comparant la norme du gradient de niveau de gris de la représentation d'axe X du pixel avec les normes de gradient de niveau de gris des représentations d'axe X de chaque pixel d'un ensemble de pixels voisins, ces pixels se trouvant sur des côtés opposés de la direction d'axe X du pixel sur lequel porte la discrimination, et en produisant un premier niveau de sortie de comparaison lorsque la norme de la représentation d'axe X du pixel sur lequel porte la discrimination est supérieure ou égale à la norme maximale des représentations d'axe X de l'ensemble de pixels voisins, et en produisant dans le cas contraire un second niveau de sortie de comparaison;
(e) un second circuit de comparaison, capable d'effectuer une discrimination portant sur la représentation d'axe Y de chaque pixel, en comparant la norme de gradient de niveau de gris de la représentation d'axe Y du pixel avec les normes des gradients de niveau de gris des représentations d'axe Y de chaque pixel d'un groupe de pixels voisins, ces pixels se trouvant sur des côtés opposés, dans la direction Y, du pixel sur lequel porte la discrimination, et en produisant un premier niveau de sortie de comparaison lorsque la norme de la représentation d'axe Y du pixel sur lequel porte la discrimination est supérieure ou égale à la norme maximale de la représentation d'axe Y du groupe de pixels voisins, et en produisant dans le cas contraire un second niveau de sortie de comparaison; et
(f) un circuit logique, capable de faire la somme logique des niveaux de sortie de comparaison qui sont produits par les circuits (d) et (e).

7. Appareil selon la revendication 6, dans lequel les premier et second circuits de comparaison comprennent respectivement :
des moyens pour remplacer la norme du gradient de niveau de gris de chaque pixel par la norme maximale des gradients de niveau de gris dans l'ensemble de pixels voisins dans la direction X, pour comparer la norme d'origine du pixel avec la norme ramplacée, et pour émettre un premier niveau de sortie de comparaison pour le pixel considéré lorsque la norme d'origine est identique à la norme remplacée, et pour émettre dans le cas contraire un second niveau de sortie de comparaison; et
des moyens pour remplacer la norme du gradient de niveau de gris de chaque pixel par la norme maximale des gradients de niveau de gris dans le groupe de pixels voisins dans la direction Y, pour comparer la norme d'origine du pixel avec la norme remplacée, et pour émettre un premier niveau de sortie de comparaison pour le pixel considéré lorsque la norme d'origine est identique à la norme remplacée, et pour émettre dans le cas contraire un second niveau de sortie de comparaison.

8. Appareil selon la revendication 6 ou 7, dans lequel les premier et second circuits de comparaison comprennent respectivement :
des moyens pour appliquer une discrimination à chaque pixel pour la direction X en comparant la norme du gradient de niveau de gris de ce pixel avec la norme minimale de l'ensemble de pixels voisins dans la direction X; et
des moyens pour appliquer une discrimination à chaque pixel pour la direction Y en comparant la norme du gradient de niveau de gris de ce pixel avec la norme minimale du groupe de pixels voisins dans la direction Y.

9. Appareil selon la revendication 6, 7 ou 8, dans lequel tous les circuits sont câblés.
